# EUROPEAN PATENT APPLICATION

(11) **EP 1 962 160 A2**
(43) Date of publication of application: **27.08.2008**
(21) Application number: 08101500.0
(22) Date of filing: 12.02.2008
(51) Int. Cl.: G05B 19/401

(54) **Machine tool having workpiece reference position setting function by contact detection**

(30) Priority: 20.02.2007 JP 2007039192
(71) Applicant: FANUC LTD, Minamitsuru-gun, Yamanashi 401-0597 (JP)
(72) Inventor: HON, Yonpyo c/o Fanuc Ltd, Minamitsuru-gun, Yamanashi 401-0597 (JP); EBIHARA, Kenzo c/o Fanuc Ltd, Minamitsuru-gun,Yamanashi 401-0597 (JP); KAWAI, Tomohiko c/o FANUC Ltd., Minamitsuru-gun, Yamanashi 401-0597 (JP)
(74) Representative: Thum, Bernhard

(57) **Abstract**

A machine tool having a function of setting a workpiece reference position to a central position of a workpiece. The workpiece has a machining surface symmetrical with respect to two orthogonal lines and is mounted on the machine tool having movable axes supported by fluid bearings so that the two lines extend parallel to axes of a machine coordinate system. A distal end of a stylus of a probe of an on-machine measuring device is brought into contact with the workpiece along first and second lines respectively parallel to the two lines from opposite sides of the workpiece. The contact is detected based on an increase of a position deviation and coordinate values at the time of the contact are stored. Coordinate values of a central position of the workpiece are obtained based on stored coordinate values and the central position is set as a reference position of the workpiece.

## Description

### BACKGROUND OF THE INVENTION

### 1. Field of the Invention

The present invention relates to a machine tool provided with an on-machine measuring device on a machine for the purpose of shape measurement and shape analysis of a workpiece, and more particularly to a machine tool with a reference position setting function for workpiece shape measurement.

### 2. Description of the Related Art

In order to realize nanometer-order shape accuracy in ultra-precision machining, it is essential to measure a shape of a machined workpiece on a machine tool without disengaging the machined workpiece from the machine tool and perform compensation machining based on the result of the measurement.

According to this on-machine measurement, accurate compensation machining can be performed by establishing a positional relationship between a cutting edge of a tool and a distal end of a stylus of a probe that is attached to an on-machine measuring device. Therefore, a relationship must be established between coordinates for workpiece machining and measurement coordinates for the on-machine measurement. A reference position of the workpiece must be set in order to establish the relationship between the coordinates for workpiece machining and the on-machine measurement coordinates.

Conventionally, the following methods are known as methods for setting the workpiece reference position.

According to one such known method, the workpiece reference position is supposed to be the center of a rotary shaft on which the workpiece is mounted. A centering sphere is attached to a faceplate of the rotary shaft. After the center of the centering sphere is aligned with the center of the rotary shaft by using a displacement sensor, the top of the centering sphere is located by using the probe of the on-machine measuring device, whereby center coordinates of the rotary shaft are determined. Then, the centering sphere is removed, and the workpiece is mounted in position. Center coordinates of the workpiece or a jig for the workpiece are aligned with the center of the rotary shaft by using the displacement sensor, and the obtained center coordinates of the rotary shaft are set as a reference position of the workpiece or the workpiece jig.

According to a known invention (see JP 8-350B), the position of an end surface of a workpiece is set as the origin of the workpiece in the following manner. A touch sensor is previously attached to a spindle, which is moved at a high speed toward the end surface of the workpiece. When the touch sensor is turned on, the spindle is stopped and then reversely moved at a low speed. A position reached when the touch sensor is turned off is stored, and this position is set as the origin of the workpiece.

According to the above-described conventional method in which the reference position of the workpiece is set with the centering sphere attached to the faceplate of the rotary shaft, complicated, time-consuming procedures are required before the reference position is set. Possibly, moreover, a rather serious error may be caused depending on an operator's expertness.

Further, the method described in JP 8-350B, in which the end surface is detected and set as the origin, is limited in applicability. According to this method, furthermore, contact is detected by means of the touch sensor. In the case where fluid bearings are used for movable axes for ultra-precision machining, therefore, the movable axes inevitably move when contacted, so that it is hard to accurately detect coordinates based on the contact detection by the touch sensor.

### SUMMARY OF THE INVENTION

The present invention provides a machine tool with a workpiece reference position setting function, capable of detecting coordinate values by contact detection and setting a central position of the workpiece obtained by detected coordinate values as a reference position of the workpiece.

A machine tool of the present invention is controlled by a numerical controller and has a function of setting a reference position of a workpiece. The workpiece has a machining surface symmetrical with respect to two orthogonal lines and is mounted on the machine tool such that the two orthogonal lines are respectively parallel to axes of a machine coordinate system. The machine tool comprises: movable axes supported by fluid bearings; position detectors for respectively detecting positions of the movable axes; position deviation determining means that determines a position deviation between a command position for each of the movable axes and a position of each of the movable axes detected by the position detectors; a measuring device arranged on the machine tool to be moved by the movable axes and including a probe having a stylus with a minute ball at a distal end thereof; drive control means that drives the movable axes to move the probe toward the workpiece from opposite sides of straight lines which are respectively parallel to the two orthogonal lines so that the distal end of the stylus is brought into contact with the workpiece; contact detecting means that detects the contact between the distal end of the stylus and the workpiece based on increase of the position deviation detected by the position deviation determining means; stopping means that stops the movable axes when the contact is detected by the contact detecting means; coordinate value obtaining means that obtains coordinate values of the movable axes when the contact is detected by the contact detecting means; and setting means that determines a central position of the workpiece based on the coordinate values obtained by the coordinate value obtaining means and sets the obtained central position as the reference position of the workpiece.

The movable axes may include a linear-motion axis, and the position detector for detecting a position of the linear-motion axis may comprise a linear scale having resolution of 10 nanometers or less.

The movable axes may include a linear-motion axis, and the position detector for detecting a position of the linear-motion axis may comprise a linear scale having resolution of 10 nanometers or less.

A central axis of the probe may be perpendicular to the machining surface of the workpiece.

The contact detecting means may detect the contact between the distal end of the stylus and the workpiece when the position deviation determined by the position deviation determining means exceeds a predetermined value.

The workpiece may be mounted on the machine tool such that the machining surface is vertical. In this case, the drive control means brings the distal end of the stylus into contact with the workpiece from opposite sides of a horizontal direction of the workpiece so that the coordinate value obtaining means obtains horizontal coordinate values when the contact detecting means detects the contact, the drive control means further brings the distal end of the stylus into contact with the workpiece in a vertical direction of the workpiece so that the coordinate value obtaining means obtains vertical coordinate values when the contact detecting means detects the contact, and the setting means determines a horizontally central position of the workpiece based on the obtained horizontal coordinate values, obtains a vertically central position of the workpiece based on the obtained vertical coordinate values, and sets a central position defined by the horizontally central position and the vertically central position as the reference position of the workpiece.

Further, the setting means may obtain a first difference between the obtained horizontal coordinate values, and set a sum of a half of the first difference and a smaller one of the horizontal coordinate values as a coordinate value of the horizontally central position of the workpiece. Similarly, the setting means may obtain a second difference between the obtained vertical coordinate values, and set a sum of a half of the second difference and a smaller one of the vertical coordinate values as a coordinate value of the vertically central position. Then, the setting means may set a central position defined by the coordinate values of the horizontally central position and the vertically central position as the reference position of the workpiece.

Measurement of the workpiece may be performed by the measuring device on the machine tool by bringing the distal end of the stylus into contact with the machining surface of the workpiece using the set reference position of the workpiece.

In a machine tool for ultra-precision machining, of which the movable axes are supported by fluid bearings and can hardly be subjected to any friction, the reference position for measuring a shape of the workpiece can be easily set by the measuring device provided on the machine tool.

### BRIEF DESCRIPTION OF THE DRAWINGS

FIG. 1 is a schematic view of a machine tool according to one embodiment of the present invention;
FIG. 2 is a schematic block diagram of a numerical control apparatus according to the same embodiment;
FIG. 3 is a diagram showing fluctuations of a position deviation observed when fluid bearings are used for movable axes;
FIGS. 4a, 4b and 4c are views illustrating a case according to the embodiment of the invention where a center coordinate position of a machining surface of a workpiece in the shape of a rectangular parallelepiped is obtained and set as a reference position of the workpiece;
FIGS. 5a, 5b and 5c are views illustrating a case according to the embodiment of the invention where a center coordinate position of a columnar workpiece of which an end surface is to be machined is obtained and set as a reference position of the workpiece; and
FIG. 6 is a flowchart showing an algorithm of workpiece reference position setting processing according to the same embodiment.

### DETAILED DESCRIPTION

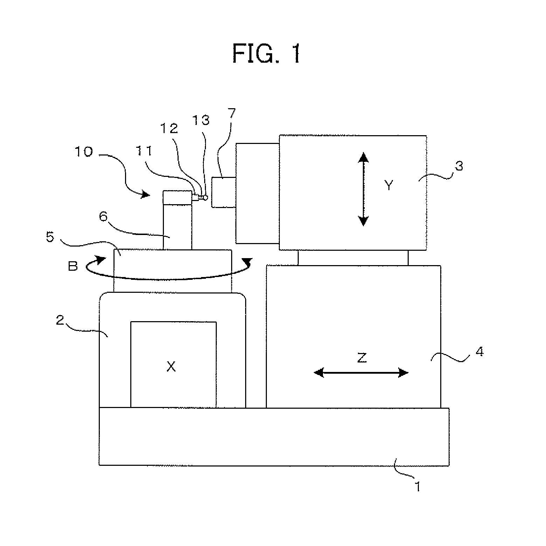

FIG. 1 is a schematic view of a machine tool in which an on-machine measuring device is located on a machine for ultra-precision machining according to one embodiment of the present invention. In this embodiment, movable axes include three linear-motion axes and one rotary axis. An X-axis member 2 on a linear-motion X-axis that is driven in a horizontal direction (perpendicular to the drawing plane of FIG 1) is mounted on a base 1 of the machine tool, and a rotary table 5 is attached to the X-axis member 2. The rotary table 5 rotates around a B-axis that is perpendicular to the X-axis. An on-machine measuring device 10 is attached to the rotary table 5 by means of a jig 6. Further, there is provided on the base 1, a Z-axis member 4 on a linear-motion Z-axis that is driven in a horizontal direction perpendicular to the X-axis. Furthermore, there is provided on the Z-axis member 4, a Y-axis member 3 on a linear-motion Y-axis which is perpendicular to the X- and Z-axis and parallel to the B-axis as a rotary axis. A workpiece 7 is mounted on the Y-axis member 3.

The on-machine measuring device 10 is provided with a probe 11 that includes a stylus 12 having a micro ball 13 on its distal end. The device 10 is located so that the central axis of the probe 11 extends perpendicular to a machining surface of the workpiece 7. The machining surface of the workpiece may be either a surface to be machined or a machined surface.

In this embodiment, motors that drive the X-, Y-, and Z-axes of the linear-motion shafts are each composed of a linear motor. A motor that drives the B-axis as the rotary axis is composed of a rotary servomotor. The rotary table 5 and the rotary servomotor are connected directly with each other and constitute a direct drive.

Further, the X-, Y-, Z-, and B-axes are supposed to be movable axes that are supported by fluid bearings (air bearings) and hardly subjected to any friction.

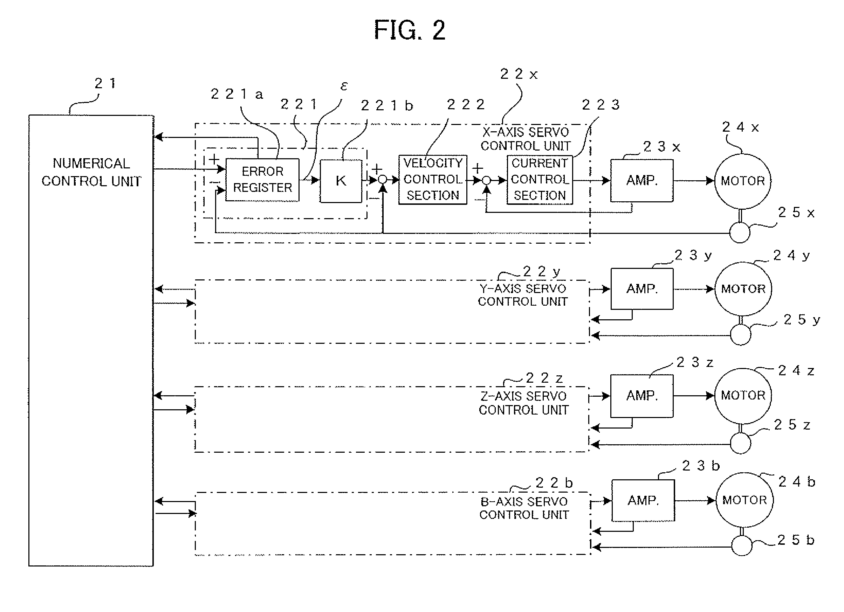

FIG. 2 is a schematic block diagram of a numerical controller for controlling the machine tool. The numerical controller includes a numerical control unit 21 and servo control units 22x, 22y, 22x and 22b. The numerical control unit 21 reads and executes a machining program and outputs motion commands for respective axes to the servo control units 22x-22z and 22b for the respective axes. As shown in the X-axis servo control unit 22x for controlling an X-axis motor 24x, each of the servo control units 22x-22z and 22b comprises a position control section 221, a velocity control section 222, a current control section 223, etc. The Y-, Z-, and B-axis servo control units 22y, 22z and 22b are constructed in the same manner as the X-axis servo control unit 22x.

The position control section 221 of each of the servo control units 22x-22z and 22b is composed of an error register 221a and a term 221b for a position gain K. The error register 221a obtains a position deviation ε or a difference between a moved position commanded from the numerical control unit 21 to each of the servo control units 22x-22z and 22b and a position fed back from each of position/velocity detectors 25x-25z and 25b for detecting positions and velocities. A command velocity is obtained by multiplying the position deviation ε by the position gain K and delivered as an output. The velocity control section 222 obtains a velocity deviation by subtracting a velocity fed back from each of the position/velocity detectors 25x-25z and 25b from the command velocity output from the position control section 221, and obtains a current command (torque command) by performing velocity feedback control, such as proportional-integral processing. Based on this current command and a current fed back from each of amplifiers 23x-23z and 23b, moreover, the current control section 223 performs current feedback control and causes each of the amplifiers 23x-23x and 23b to drive each of motors 24x-24z and 24b.

In this embodiment, the X-, Y-, and Z-axis motors 24x, 24y and 24z for the linear-motion shafts are each composed of a linear motor. Further, the motor 24b that drives the B-axis as the rotary axis is composed of a rotary servomotor and configured to directly drive the rotary table 5, as mentioned before. The respective positions of movable members that are driven individually by the X-, Y-, and Z-axis linear motors 24x, 24y and 24z are detected by the position/velocity detectors 25x, 25y and 25z, respectively, which are each composed of a linear scale.

Since the machine tool of the present embodiment performs ultra-precision machining, the position/velocity detectors 25x-25z that are each composed of a linear scale are high-precision detectors with a detection resolution of 10 nanometers or less. Also, the position/velocity detector 25b, e.g., an encoder, attached to the motor 24b for the rotary B-axis is a high-precision detector with a resolution of one ten-thousandth degree or less.

Although the respective configurations of the machine tool and the control sections for controlling the machine tool described above are substantially the same as those of the conventional ones for ultra-precision machining, the machine tool of the present invention differs from the conventional one in that it is provided with the on-machine measuring device 10 and has a workpiece reference position setting function based on contact detection.

According to the present embodiment, the micro ball 13 on the distal end of the stylus 12 included in the probe 11 of the on-machine measuring device 10 is brought into contact with the workpiece 7, and the center coordinate position of the workpiece is obtained as a reference position from resulting coordinate values for the contact.

In the machine tool of the present embodiment, as mentioned before, the X-, Y-, and Z-axis members 2, 3 and 4 as the linear-motion shafts and the rotary table 5 that rotates around the B-axis as the rotary axis are supported by the fluid bearings and hardly subjected to any friction. If the micro ball 13 on the distal end of the stylus 12 of the probe 11 and the workpiece 7 contact each other so that a load acts on the probe 11 or the stylus 12, therefore, any of the movable axes is moved by the load. Since the position deviation ε or the difference between the command position and the detected position is increased by this movement, the contact between the probe 11 and the workpiece 7 can be detected by detecting the increase of the position deviation ε.

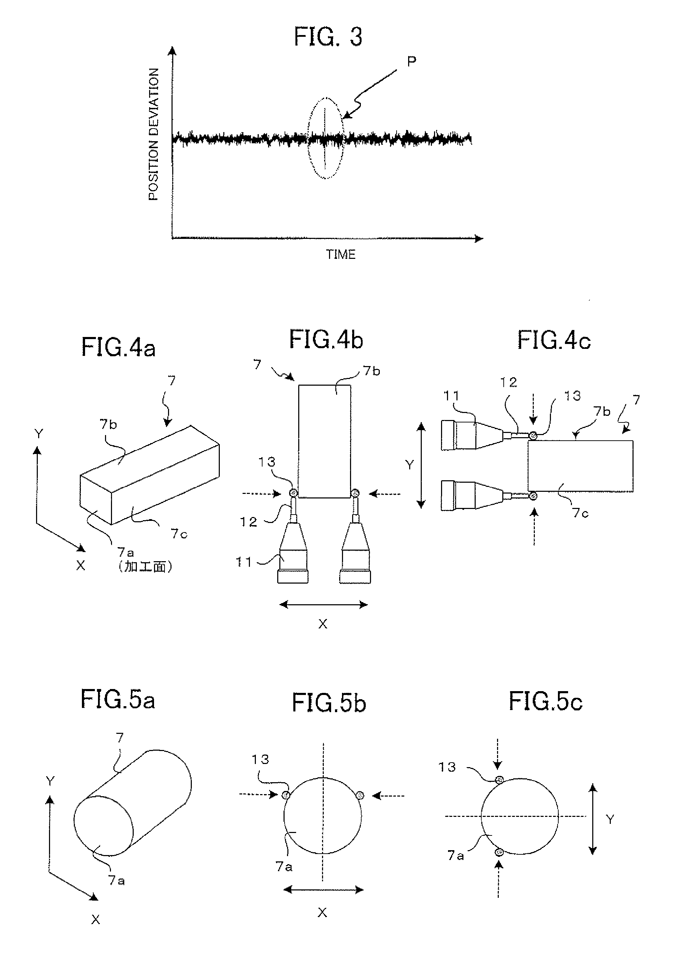

FIG. 3 shows the result of measurement of the position deviation obtained when moving parts are moved by the fluid bearings for the movable axes. Since the movement of the movable axes hardly generates any frictional force, the position deviation varies very little. In FIG. 3, symbol P designates a point at which the micro ball 13 on the distal end of the stylus 12 and the workpiece 7 contact each other.

As shown in FIG. 3, the movable axes that are supported by the fluid bearings are hardly subject to any position deviation, and a position deviation that is generated when a small load acts on these shafts is larger than in the case where no load acts. Thus, a comparison reference value can be easily set for the determination by the position deviation of whether or not the movable axes are subjected to any load, so that the contact between the micro ball 13 on the distal end of the stylus 12 and the workpiece 7 can be detected with high accuracy.

According to the present embodiment, a cross section of the workpiece 7 that is parallel to the machining surface has the same shape as the machining surface, and the machining surface of the workpiece 7 is shaped so that it is axially symmetrical with respect to two orthogonal lines. The workpiece 7 is mounted on the machine tool so that the two orthogonal lines with respect to which the workpiece 7 is axially symmetrical extend parallel to axes of a machine coordinate system. In the example shown in FIG 1, the workpiece 7 is mounted so that its symmetrical lines extend parallel to the X- and Y-axes, individually.

FIGS. 4a, 4b and 4c are views illustrating a case according to the present embodiment where the center coordinate position of a machining surface 7a of the workpiece 7 in the shape of a rectangular parallelepiped is obtained and set as the reference position of the workpiece. As shown in FIG. 4a, the machining surface 7a of the rectangular parallelepipedic workpiece 7 is a vertical surface having a shape axially symmetrical with respect to the two orthogonal straight lines in the vertical direction (Y-axis direction) and the horizontal direction (X-axis direction). If the center coordinate position of the workpiece 7 is detected and set as the reference position of the workpiece, the ball 13 on the stylus 12 of the probe 11 of the on-machine measuring device 10 is moved along lines parallel to axially symmetrical lines so that it contacts the workpiece 7 from either side thereof. If the position deviation ε increases, the then coordinate values are stored as the coordinate values of the contact position.

FIG. 4b is a view illustrating an operation such that the workpiece 7 and the probe 11 are relatively moved in the horizontal direction (X-axis direction) to obtain coordinate values of points of contact between the ball 13 of the stylus 12 and the workpiece 7. FIG. 4b is a top view showing an upper surface 7b of the workpiece 7, taken from above as in FIG. 1. The X-, Y-, and Z-axis members 2, 3 and 4 are moved and positioned so that the ball 13 of the stylus 12 of the probe 11 is allowed to contact a side surface 7c of the workpiece 7, and the X-axis member 2 is driven to move the probe 11 horizontally toward the workpiece 7, as indicated by broken-line arrow in FIG. 4b. Then, a coordinate value of a moving axis (X-axis coordinate value) is obtained based on a contact point at which a position deviation (a position deviation obtained by the error register 221a of the servo control unit 22x that drives the X-axis member or a position deviation obtained by the error register 221a of the servo control unit 22b that drives the rotary table 5) obtained when the ball 13 of the stylus 12 contacts the side surface 7c of the workpiece 7 increases. Subsequently, the probe 11 is moved toward the opposite side surface, and the X-axis member 2 is driven to move the probe 11 horizontally toward the workpiece 7 in like manner. Then, an X-axis coordinate value is obtained such that the ball 13 of the stylus 12 contacts the side surface 7c of the workpiece 7 to increase the position deviation. An intermediate coordinate value in the horizontal direction (X-axis direction) of the machining surface can be determined by adding up the two X-coordinate values obtained in this manner and halving the resulting sum. This coordinate value represents a center coordinate value in the horizontal direction of the machining surface 7a, that is, a center X-axis coordinate value.

FIG. 4c is a view illustrating an operation such that the workpiece 7 and the probe 11 are relatively moved in the vertical direction to obtain coordinate values of points of contact between the ball 13 of the stylus 12 and the workpiece 7. In FIG. 1, the Y-axis member 3 is driven to bring the ball 13 of the stylus 12 into contact with the upper surface 7b and the lower surface of the workpiece 7, and a center Y-axis coordinate of the machining surface 7a of the workpiece is obtained. The X-, Y-, and Z-axis members 2, 3 and 4 are moved and positioned so that the ball 13 of the stylus 12 of the probe 11 is allowed to contact the upper surface 7b of the workpiece 7, and the Y-axis member 3 is driven to move the probe 11 vertically toward the workpiece 7, as indicated by broken-line arrow in FIG. 4c. Then, a Y-axis coordinate value is obtained based on a contact point at which the ball 13 of the stylus 12 contacts the upper surface 7b of the workpiece 7 so that a position deviation of the Y-axis increases.

Likewise, the Y-axis member 3 is then moved so that the ball 13 of the stylus 12 is allowed to contact the lower surface of the workpiece 7, and a Y-axis coordinate value is obtained such that the position deviation of the Y-axis increases. A center coordinate value in the vertical direction (Y-axis direction) of the machining surface 7a, that is, a center Y-axis coordinate, can be determined by adding up the two Y-coordinate values obtained in this manner and halving the resulting sum.

Thus, the center coordinate values of the machining surface (XY-plane) can be obtained.

FIGS. 5a, 5b and 5c show an example of the workpiece 7 in the form of a column, an end surface of which is a machining surface. Also in this example, as shown in FIG 1, the workpiece 7 is mounted so that its machining surface is a vertical surface. The machining surface 7a is axially symmetrical with respect to the horizontal X-axis and the vertical Y-axis. Also in this case of the workpiece 7, as shown in FIGS. 5b and 5c, the workpiece 7 and the probe 11 are relatively moved so that the ball 13 of the stylus 12 of the probe 11 approaches and contacts the workpiece 7 from either side thereof in the horizontal direction (X-axis direction) and the vertical direction (Y-axis direction). The center of a circle of the machining surface 7a can be obtained by determining intermediate coordinates of the contact point. As shown in FIG. 5b, the ball 13 of the stylus 12 is caused to approach and contact the workpiece from either side in the X-axis direction, and an intermediate point between two coordinate values obtained at the time of the contact is determined, whereby the X-coordinate of the center of the machining surface 7a can be obtained. Likewise, as shown in FIG. 5c, the ball 13 of the stylus 12 is caused to approach and contact the workpiece from either side in the Y-axis direction, and an intermediate point between two coordinate values obtained at the time of the contact is determined, whereby the Y-coordinate of the center of the machining surface 7a can be obtained.

If the center coordinate position of the workpiece thus obtained is set as the reference position, a correspondence can be established between the distal end position of the stylus of the probe of the on-machine measuring device and the cutting edge position of the tool. If the origin of a coordinate system of the machining program is supposed to be the workpiece center position, for example, the distal end position of the stylus and the cutting edge position of the tool are made coincident by using the set coordinate position as the origin, so that accurate compensation machining can be performed.

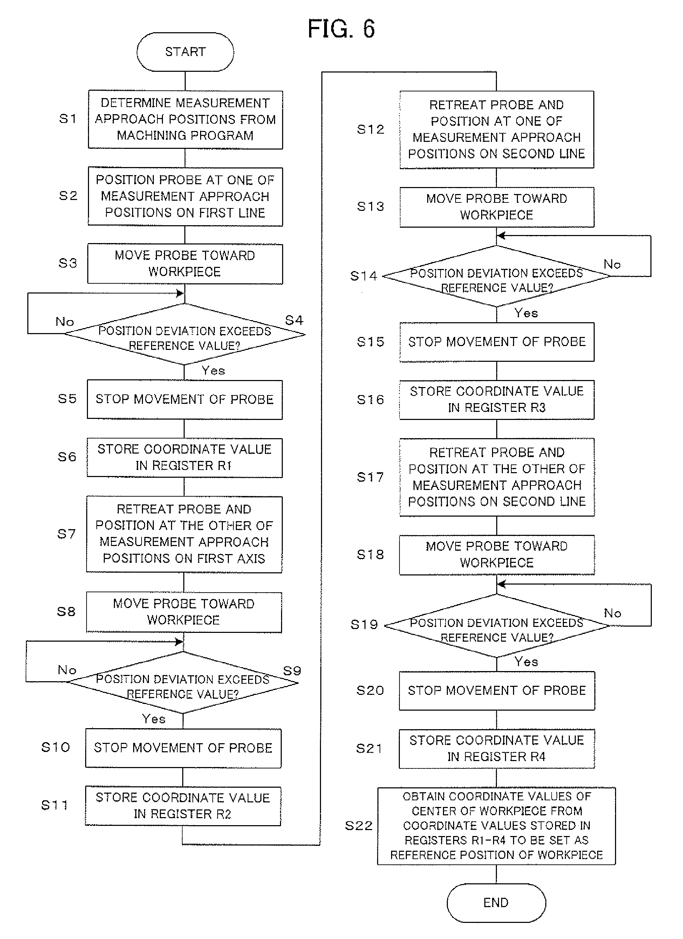

FIG. 6 is a flowchart showing an algorithm of workpiece reference position setting processing executed by the numerical control apparatus.

The workpiece 7 is mounted on the machine tool so that its symmetrical lines extend parallel to the axes of the machine coordinate system, and the probe 11 of the on-machine measuring device is located so that its central axis of the probe 11 extends at right angles to the machining surface of the workpiece. If a workpiece reference position setting command is input to the numerical control apparatus after the machining program to be executed is input to the control apparatus, a processor of the numerical control unit 21 starts the processing shown in FIG. 5.

First, based on data in the input machining program, straight lines parallel to the two symmetrical lines on the machining surface of the workpiece 7 are set as approach lines and four measurement approach positions are determined at which the probe 11 does not interfere with the workpiece 7 on the approach lines and the ball 13 of the stylus 12 of the probe 11 will come in contact with the workpiece 7 when the probe 11 is moved along the approach lines toward the workpiece 7 (Step S1).

The probe 11 is positioned at one of the measurement approach positions on a first approach line (which is parallel to the horizontal X-axis in this embodiment) (Step S2). Then, the probe 11 is moved toward the workpiece 7. More specifically, the X-axis motor 24x is driven to move the X-axis member 2, thereby moving the probe 11 toward the workpiece 7 (Step S3). Subsequently, it is determined whether or not a reference value is exceeded by the position deviation ε that is obtained by the error register 221a of the position control section 221 of each of the servo control units 22x-22z and 22b (Step S4). When the ball 13 on the distal end of the stylus 12 of the probe 11 contacts the workpiece 7, the X-axis position deviation or the B-axis position deviation increases and exceeds the reference value. When this is detected, the movement of the probe 11 is stopped (or the drive of the X-axis motor 24x is stopped), and the then a coordinate value of the movable axis, that is, the coordinate value of the X-axis is stored in a register R1 (Steps S5 and S6). A method for stopping the movement of the probe 11 (or the drive of the X-axis motor 24x) utilizes a skip function of the numerical control apparatus. When a skip signal indicative of the position deviation ε that exceeds the reference value is input, according to this method, the remaining motion commands issued in Step S3 are stopped, and the procedure is advanced to the next process.

Then, the probe 11 is returned to the measurement approach position, retreat so as not to interfere with the workpiece 7, and positioned in the other of the measurement approach positions on the first approach line (parallel to the X-axis) (Step S7). In this embodiment, the B-axis motor 24b is driven to rotate the rotary table 5 by a predetermined amount, or the Z-axis motor 24z is driven to rotate the Z-axis member 4 by a predetermined amount, whereby the probe 11 and the workpiece 7 are prevented from interfering with each other. In this state, the X-axis member 2 is driven to move the probe 11, whereupon the rotary table 5 or the Z-axis member 4 is restored to its original position. Thus, the probe 11 can be positioned in the other measurement approach position on the first approach line.

Then, the X-axis motor 24x is driven to move the probe 11 toward the workpiece 7 (Step S8). When the probe 11 contacts the workpiece 7 and if the reference value is exceeded by the position deviation of the X-axis or the B-axis (Step S9), the drive of the X-axis motor 24x is stopped (Step S10), and the then X-axis coordinate value is loaded into a register R2 (Step S11).

Further, the rotary table 5 or the Z-axis member 4 is moved to retreat the probe 11 so as not to interfere with the workpiece 7, whereupon the probe 11 is positioned in one of measurement approach positions on a second approach line (parallel to the Y-axis) (Step S12). In this case, the probe 11 can be positioned relatively to the workpiece 7 by moving the Y-axis member. Then, the Y-axis motor 24y is driven to move the probe 11 relatively toward the workpiece 7 (Step S13). When the workpiece 7 and the ball 13 on the distal end of the stylus 12 of the probe 11 contact each other and if the reference value is exceeded by the Y-axis position deviation ε (Step S14), the movement of the probe 11 relative to the workpiece 7 is stopped (Step S 15). Specifically, the drive of the Y-axis motor 24y is stopped to stop the movement of the Y-axis member 3. Also, the then Y-axis coordinate value is loaded into a register R3 (Step S 16).

Likewise, the probe 11 is retreated so as not to interfere with the workpiece 7, and the workpiece 7 is positioned relatively to the probe 11 in the other measurement approach position on the second approach line (parallel to the Y-axis) (Step S 17). Then, the Y-axis motor 24y is driven to move the workpiece 7 toward the probe 11 (Step S 18). When the workpiece 7 and the ball 13 on the distal end of the stylus 12 of the probe 11 contact each other and if the reference value is exceeded by the Y-axis position deviation ε (Step S 19), the movement of the probe 11 relative to the workpiece 7 is stopped (Step S20). Specifically, the drive of the Y-axis motor 24y is stopped to stop the movement of the Y-axis member 3. Also, the then Y-axis coordinate value is stored in a register R4 (Step S21).

An intermediate coordinate value between the two X-axis coordinate values stored in the registers R1 and R2 is obtained by adding up the two X-coordinate values and dividing the sum by "2". Further, an intermediate coordinate value between the two Y-axis coordinate values stored in the registers R3 and R4 is obtained by adding up the two Y-coordinate values and dividing the sum by "2". Since the intermediate coordinate values of the X- and Y-axes represent the coordinate values of the center of the workpiece 7, a coordinate position indicated by the coordinate values is set as the reference position of the workpiece (Step S22), whereupon this workpiece reference position setting processing is completed.

Alternatively, the workpiece center coordinate position obtained in the following manner may be set as the workpiece reference position. A difference between coordinate values at horizontally opposite ends is determined, and a coordinate value equal to the sum of a half of this difference and the smaller coordinate value is used as a center coordinate value in the horizontal direction of the workpiece. A difference between coordinate values at vertically opposite ends is determined, and a coordinate value equal to the sum of a half of this difference and the smaller coordinate value is used as a center coordinate value in the vertical direction of the workpiece.

Based on the workpiece reference position set in this manner, the distal end of the stylus of the probe is brought into contact with the workpiece surface, and the workpiece is measured on the machine tool by the on-machine measuring device. Since the distal end of the stylus and the cutting edge of the edge tool are associated with each other through the workpiece reference position, the compensation machining can be clarified based on the measured shape.

## Claims

1. A machine tool controlled by a numerical controller and having a function of setting a reference position of a workpiece, in which the workpiece has a machining surface symmetrical with respect to two orthogonal lines and is mounted on the machine tool such that the two orthogonal lines are respectively parallel to axes of a machine coordinate system, said machine tool comprising:
movable axes supported by fluid bearings;
position detectors for respectively detecting positions of said movable axes;
position deviation determining means that determines a position deviation between a command position for each of the movable axes and a position of each of the movable axes detected by said position detectors;
a measuring device arranged on the machine tool to be moved by said movable axes and including a probe having a stylus with a minute ball at a distal end thereof;
drive control means that drives said movable axes to move the probe toward the workpiece from opposite sides of straight lines which are respectively parallel to the two orthogonal lines so that the distal end of the stylus is brought into contact with the workpiece;
contact detecting means that detects the contact between the distal end of the stylus and the workpiece based on increase of the position deviation detected by said position deviation determining means;
stopping means that stops said movable axes when the contact is detected by said contact detecting means;
coordinate value obtaining means that obtains coordinate values of said movable axes when the contact is detected by said contact detecting means; and
setting means that determines a central position of the workpiece based on the coordinate values obtained by said coordinate value obtaining means and sets the obtained central position as the reference position of the workpiece.

2. A machine tool according to claim 1, wherein said movable axes include a linear-motion axis, and the position detector for detecting a position of the linear-motion axis comprises a linear scale having resolution of 10 nanometers or less.

3. A machine tool according to claim 1, wherein said movable axes include a rotary axis directly connected to a motor, and the position detector for detecting a position of the rotary axis comprises an encoder having resolution of one ten-thousandth degree or less.

4. A machine tool according to claim 1, wherein a central axis of the probe is perpendicular to the machining surface of the workpiece.

5. A machine tool according to claim 1, wherein said contact detecting means detects the contact between the distal end of the stylus and the workpiece when the position deviation determined by said position deviation determining means exceeds a predetermined value.

6. A machine tool according to claim 1, wherein the workpiece is mounted on the machine tool such that the machining surface is vertical, said drive control means brings the distal end of the stylus into contact with the workpiece from opposite sides of a horizontal direction of the workpiece so that said coordinate value obtaining means obtains horizontal coordinate values when said contact detecting means detects the contact, said drive control means further brings the distal end of the stylus into contact with the workpiece in a vertical direction of the workpiece so that said coordinate value obtaining means obtains vertical coordinate values when said contact detecting means detects the contact, and said setting means determines a horizontally central position of the workpiece based on the obtained horizontal coordinate values, obtains a vertically central position of the workpiece based on the obtained vertical coordinate values, and sets a central position defined by the horizontally central position and the vertically central position as the reference position of the workpiece.

7. A machine tool according to claim 6, wherein said setting means obtains a first difference between the obtained horizontal coordinate values, and sets a sum of a half of the first difference and a smaller one of the horizontal coordinate values as a coordinate value of the horizontally central position of the workpiece; obtains a second difference between the obtained vertical coordinate values, and sets a sum of a half of the second difference and a smaller one of the vertical coordinate values as a coordinate value of the vertically central position; and sets a central position defined by the coordinate values of the horizontally central position and the vertically central position as the reference position of the workpiece.

8. A machine tool according to claim 1, wherein measurement of the workpiece is performed by said measuring device on the machine tool by bringing the distal end of the stylus into contact with the machining surface of the workpiece using the set reference position of the workpiece.
